# EUROPÄISCHE PATENTSCHRIFT

(11) **EP 4 157 657 B1**
(45) Veröffentlichungstag und Bekanntmachung des Hinweises auf die Patenterteilung: **26.11.2025**
(21) Anmeldenummer: 21730521.8
(22) Anmeldetag: 28.05.2021
(51) Int. Cl.: B60H 1/00, G06F 18/2413, G06V 10/82, G06V 20/56

(54) **VERFAHREN ZUR EINSTELLUNG EINER AUSSENLUFTZUFUHR IN EINEN INNENRAUM EINES FAHRZEUGES**
METHOD FOR ADJUSTING A SUPPLY OF EXTERNAL AIR INTO AN INTERIOR COMPARTMENT OF A VEHICLE
PROCÉDÉ PERMETTANT DE RÉGLER UNE ALIMENTATION EN AIR EXTÉRIEUR DANS UN COMPARTIMENT INTÉRIEUR D'UN VÉHICULE

(30) Priorität: 02.06.2020 DE 102020003282
(43) Veröffentlichungstag der Anmeldung: 05.04.2023
(73) Patentinhaber: Mercedes-Benz Group AG, 70372 Stuttgart (DE)
(72) Erfinder: HANUSCHKIN, Alexander, 71263 Weil der Stadt (DE); STUDER, Stefan, 70565 Stuttgart (DE); ETTER, Florian, 73734 Esslingen (DE)
(74) Vertreter: Novagraaf Group
(86) Internationale Anmeldenummer: PCT/EP2021/064421
(87) Internationale Veröffentlichungsnummer: WO 2021/244984

(56) Entgegenhaltungen:
- WO-A1-2019/127085
- CN-A- 110 239 577
- FR-A1- 3 051 147
- KR-A- 20170 130 118
- US-A1- 2016 318 368
- US-A1- 2017 113 512

## Beschreibung

Die Erfindung betrifft ein Verfahren zur Einstellung einer Außenluftzufuhr in einen Innenraum eines Fahrzeuges, wobei anhand erfasster Signale eines im Innenraum angeordneten Schadstoffsensors während eines Fahrbetriebes des Fahrzeuges kontinuierlich eine Innenraumschadstoffbelastung ermittelt wird.

Aus der DE 41 06 078 A1 sind eine Vorrichtung und ein Verfahren zur Steuerung der Belüftung eines Innenraumes eines Kraftfahrzeuges in Abhängigkeit von Signalen eines im Wesentlichen nur von Außenluft beaufschlagten Schadstoffsensors bekannt. Dabei erfolgt eine Umschaltung zwischen einem Zuluftbetrieb und einem Umluftbetrieb in Abhängigkeit von einer Schadstoffkonzentration. Mittels eines Rechners wird unter Berücksichtigung der Sensorsignale, der jeweiligen Betriebsweise (Zuluft oder Umluft) sowie vorgegebener und abrufbarer Erfahrungswerte eine mit der Schadstoffkonzentration im Innenraum korrelierte erste Größe bestimmt und mit einer aus den Sensorsignalen abgeleiteten, mit der Schadstoffkonzentration der Außenluft korrelierten zweiten Größe verglichen wird. Je nach dem Ergebnis dieses Vergleiches wird entweder der Zuluftbetrieb oder der Umluftbetrieb eingeschaltet.

Weiterhin ist aus der US 2016 / 0 318 368 A1 ein Verfahren zum Steuern einer Luftqualität innerhalb eines Innenraums eines Fahrzeugs basierend auf einer prognostizierten Luftqualität bekannt. Dabei werden Luftqualitätsdaten mittels eines dem Fahrzeug zugeordneten Fahrzeugsensors und eines Sensors eines anderen Fahrzeugs oder eines externen Umgebungssensors oder einer entfernt angeordneten Informationsquelle empfangen. Weiterhin werden ein erstes Luftqualitätsmaß für eine Fahrzeugumgebung, ein zweites Luftqualitätsmaß für den Innenraum des Fahrzeugs auf Grundlage der Luftqualitätsdaten und basierend auf den Luftqualitätsmaßen ein Steuersignal bestimmt. Das Steuersignal wird zum automatischen Steuern der Luftqualität innerhalb des Innenraums des Fahrzeugs an ein Klimatisierungssystem des Fahrzeugs gesendet.

Weitere Verfahren zur Steuerung einer Belüftung eines Innenraums eines Fahrzeugs sind in WO 2019/127085 A1, KR 2017 0130118 A, FR 3051147 A1, CN 110 239 577 A und US 2017113512 A1 beschrieben.

Der Erfindung liegt die Aufgabe zugrunde, ein Verfahren zur Einstellung einer Außenluftzufuhr in einen Innenraum eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Einstellung einer Außenluftzufuhr in einen Innenraum eines Fahrzeuges sieht vor, dass anhand erfasster Signale eines im Innenraum angeordneten Schadstoffsensors während eines Fahrbetriebes des Fahrzeuges kontinuierlich eine Innenraumschadstoffbelastung ermittelt wird. Erfindungsgemäß wird eine Schadstoffbelastung einer Außenluft auf einem dem Fahrzeug vorausliegenden Fahrstreckenabschnitt prognostiziert, wobei die Außenluftzufuhr in Abhängigkeit der prognostizierten Schadstoffbelastung der Außenluft automatisch geregelt wird.

Dabei wird die Schadstoffbelastung der Außenluft des Fahrzeuges anhand visueller Informationen bestimmt, die anhand erfasster Signale zumindest einer fahrzeugseitigen visuellen Erfassungseinheit ermittelt werden. Insbesondere werden die erfassten visuellen Informationen zur Ermittlung der Schadstoffbelastung der Außenluft weiterverarbeitet und ausgewertet.

So ist es möglich, aus den erfassten visuellen Informationen semantische Informationen zu extrahieren, wobei hierzu insbesondere Methoden eines maschinellen Lernens, z. B. Verfahren zur Objekterkennung, angewendet werden. Beispielsweise können fahrzeugseitig gegebenenfalls Vorlagen hinterlegt sein, die mit einem in den visuellen Informationen detektierten Objekt verglichen werden, um zu erkennen, welche Art von Objekt sich in einer Umgebung des Fahrzeuges befindet.

Durch Anwendung des Verfahrens wird ein Fahrkomfort in dem Innenraum des Fahrzeuges erhöht und eine Gesundheit von Insassen in dem Innenraum geschützt. Insbesondere wird die Gesundheit der Insassen geschützt, indem die Außenluftzufuhr, d. h. eine Luftzufuhr einer Innenraumbelüftung des Fahrzeuges bei einer zu erwartenden zukünftigen hohen Schadstoffkonzentration der Außenluft abgestellt oder zumindest reduziert wird. Mittels des Verfahrens wird also die Außenluftzufuhr in den Innenraum verringert, bevor Schadstoffe mit der Außenluft in den Innenraum des Fahrzeuges gelangen.

Zudem wird anhand der visuellen Informationen ein Fingerabdruck zur Identifizierung Schadstoffe ausstoßender Objekte in zukünftig erfassten Signalen der zumindest einen visuellen Erfassungseinheit extrahiert. Mittels des Fingerabdruckes kann also realisiert werden, dass während einer Entwicklung eines Modells zur Einstellung der Außenluftzufuhr nicht definierte sowie bekannte und somit nicht berücksichtigte Objekte identifiziert werden können.

Darüber hinaus sieht das Verfahren vor, dass fortlaufend eine momentane Position des Fahrzeuges ermittelt wird, so dass es beispielsweise anhand der momentanen Position möglich ist, zu erfassen, dass sich das Fahrzeug in einem Gewerbegebiet, z. B. in unmittelbarer Nähe zu einer Industrieanlage, befindet. Auch in einem solchen Fall wird die Außenluftzufuhr in den Innenraum des Fahrzeuges zumindest verringert.

Auf Basis der extrahierten semantischen Informationen, des extrahierten Fingerabdruckes und anhand der ermittelten momentanen Position des Fahrzeuges wird ein zeitverzögertes Modell im Fahrzeug derart trainiert, dass die Innenraumschadstoffbelastung als Zielgröße prognostiziert wird. Ein solches Modell berücksichtigt also eine zeitliche Verzögerung und eine zeitliche Integration der Schadstoffbelastung der Außenluft des Fahrzeuges.

Weiterhin sieht das Verfahren vor, dass die Zeitverzögerung zwischen einer hohen Innenraumschadstoffbelastung und einer durch das Modell extrahierten Ursache bestimmt wird. Das derart trainierte Modell wird im Fahrzeug verwendet, um mittels Eingabeinformationen, insbesondere mittels der semantischen Informationen, des Fingerabdruckes, insbesondere eines sogenannten Perzeption-Fingerabdruckes und der momentanen Position des Fahrzeuges eine zu erwartende zukünftige Schadstoffinnenraumbelastung des Fahrzeuges vorherzusagen. Dadurch ist es möglich, die Außenluftzufuhr derart zu regeln, dass möglichst wenige Schadstoffe in den Innenraum gelangen, um so die Gesundheit der Insassen zu schützen.

In einer weiteren Ausführung des Verfahrens werden als semantische Informationen Schadstoffe ausstoßende stationäre Objekte und bewegte Objekte in den visuellen Informationen einer Umgebung des Fahrzeuges erfasst, wobei beispielsweise ein dem Fahrzeug vorausfahrender Lastkraftwagen und ein mit Wirtschaftsdünger, sogenannter Gülle, beladener Anhänger eines Traktors als Schadstoff ausstoßende bewegte Objekte erkannt werden und die Außenluftzufuhr in den Innenraum abgeschaltet wird.

Des Weiteren sieht das Verfahren in einer weiteren möglichen Ausführungsform vor, die momentane Position mit zeitlichen Informationen, z.B. der Uhrzeit und dem Wochentag, anzureichern, sodass es beispielsweise anhand der momentanen Position und dem aktuellen Wochentag möglich ist, zu erfassen, dass sich das Fahrzeug insbesondere an einem Werktag in einem Gewerbegebiet, z. B. in unmittelbarer Nähe zu einer Industrieanlage, befindet. Auch in einem solchen Fall wird die Außenluftzufuhr in den Innenraum des Fahrzeuges zumindest verringert.

In einer weiteren möglichen Ausbildung wird das, insbesondere fahrzeugseitig, trainierte Modell einer zentralen Rechnereinheit zugeführt, so dass dieses Modell mit zumindest einem weiteren Modell eines weiteren Fahrzeuges zusammengeführt und aggregiert werden kann.

Dieses Modell und/oder ein aggregiertes Modell können bzw. kann dann mittels der zentralen Rechnereinheit an weitere Fahrzeuge einer Fahrzeugflotte übermittelt werden und einer Einstellung der Außenluftzufuhr eines jeweiligen weiteren Fahrzeuges der Fahrzeugflotte zur Verfügung gestellt werden.

Ausführungsbeispiele der Erfindung werden im Folgenden anhand einer Zeichnung näher erläutert.

Dabei zeigt die:

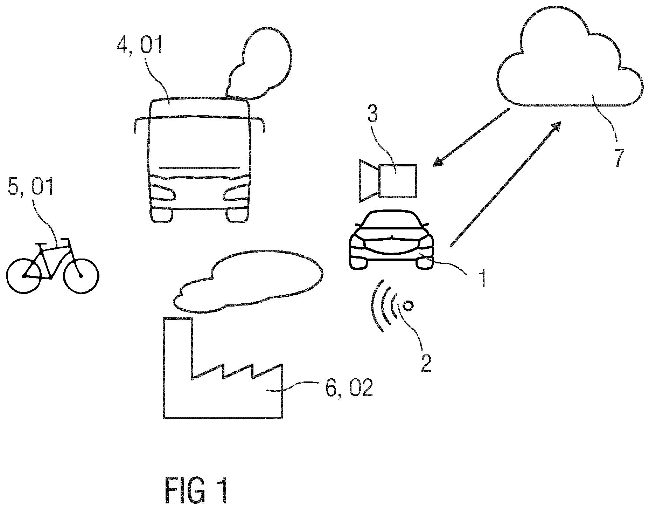

- Fig. 1: schematisch ein Fahrzeug mit einem Schadstoffsensor und einer visuellen Erfassungseinheit sowie verschiedene stationäre und bewegte Objekte einer Umgebung des Fahrzeuges.

In der einzigen Figur ist ein Fahrzeug 1 mit einem Schadstoffsensor 2 und einer visuellen Erfassungseinheit 3 in Form einer Kamera dargestellt, wobei zudem ein Lastkraftwagen 4 und ein Fahrrad 5 als bewegte Objekte O1, eine Industrieanlage 6 als stationäres Objekt O2 und eine zentrale Rechnereinheit 7 gezeigt sind.

Der Schadstoffsensor 2 ist in einem Innenraum des Fahrzeuges 1 angeordnet und erfasst während eines Fahrbetriebes des Fahrzeuges 1 fortlaufend Signale, anhand welcher eine Innenraumschadstoffbelastung ermittelt wird. Alternativ oder zusätzlich zu dem Schadstoffsensor 2 kann auch ein Sensor im Innenraum des Fahrzeuges 1 angeordnet sein, der Signale erfasst, anhand welcher menschlich wahrnehmbare Gerüche erkannt werden.

Die anhand erfasster Signale des Schadstoffsensors 2 ermittelte Innenraumschadstoffbelastung stellen eine zeitlich verzögerte und zeitlich integrierte Funktion einer Schadstoffbelastung einer äußeren Umgebung des Fahrzeuges 1, also einer Außenluft, dar.

Sofern anhand der erfassten Signale des Schadstoffsensors 2 eine Innenraumschadstoffbelastung ermittelt wird, wird, wie aus dem Stand der Technik bekannt ist, eine Belüftung eines Innenraumes des Fahrzeuges 1 gesteuert.

Um eine Einstellung einer Außenluftzufuhr in den Innenraum des Fahrzeuges 1 vorzunehmen, bei welcher die Innenraumschadstoffbelastung so gering wie möglich gehalten wird, so dass eine Gesundheit von Insassen in Bezug auf eine Schadstoffbelastung geschützt werden kann, ist ein im Folgenden beschriebenes Verfahren vorgesehen.

Dabei wird eine Schadstoffbelastung der Außenluft auf einem dem Fahrzeug 1 vorausliegenden Fahrstreckenabschnitt prognostiziert und die Außenluftzufuhr in Abhängigkeit der prognostizierten Schadstoffbelastung automatisch geregelt.

Insbesondere sieht das Verfahren vor, dass die Außenluftzufuhr in den Innenraum des Fahrzeuges 1 abgestellt wird, wenn zukünftig eine vergleichsweise hohe Schadstoffkonzentration der Außenluft erwartet wird. Mittels des Verfahrens wird also die Außenluftzufuhr verringert, bevor Schadstoffe mit der Außenluft in den Innenraum des Fahrzeuges 1 gelangen.

Wie oben beschrieben, werden mittels des fahrzeugseitigen Schadstoffsensors 2 im Fahrbetrieb des Fahrzeuges 1 fortlaufend Signale erfasst, anhand derer eine Innenraumschadstoffbelastung ermittelt wird.

Das Fahrzeug 1 weist die visuelle Erfassungseinheit 3 in Form der Kamera auf, deren Erfassungsbereich vor das Fahrzeug 1 gerichtet ist und mittels der im Fahrbetrieb des Fahrzeuges 1 fortlaufend Signale erfasst, anhand derer eine Umgebung des Fahrzeuges 1 und sich in dieser befindende Objekte O1, O2 detektiert werden.

Weiterhin umfasst das Fahrzeug 1 eine nicht näher dargestellte satellitengestützte Positionsbestimmungseinheit und eine digitale Karte, so dass eine momentane Position des Fahrzeuges 1 bestimmt wird.

Anhand der erfassten Signale der visuellen Erfassungseinheit 3 werden visuelle Informationen ermittelt, die ausgewertet werden.

Dabei werden anhand der visuellen Informationen semantische Informationen mittels Methoden eines maschinellen Lernens extrahiert, wobei insbesondere eine Objekterkennung in Bezug auf bekannte Objekte O1, O2 angewendet wird. D. h., es kann erkannt werden, welche Objekte O1, O2 sich in der Umgebung des Fahrzeuges 1 befinden. Die in der Umgebung des Fahrzeuges 1 detektierten Objekte O1, O2 können insbesondere in bewegte Objekte O1 und stationäre Objekte O2 unterschieden werden.

Zudem kann anhand der semantischen Informationen ermittelt werden, welche der Objekte O1, O2 Schadstoffe ausstoßen. Wird z. B. ein Fahrrad 5 als bewegtes Objekt O1 in der Umgebung des Fahrzeuges 1 detektiert, so wird anhand bestimmter Merkmale des Fahrrades 5 erkannt, dass es sich um ein Fahrrad 5 handelt, welches keine Schadstoffe ausstößt.

Weiterhin wird ein Fingerabdruck, insbesondere ein Perzeption-Fingerabdruck, anhand der visuellen Informationen, beispielsweise mittels gefalteter neuronaler Netzwerke, extrahiert, ohne dass es erforderlich ist, vordefinierte Objekte O1, O2 zuzuordnen. Dadurch können während einer Entwicklung eines weiter unten erwähnten, mittels des Verfahrens erstellten Modells nicht vordefinierte und bekannte Objekte O1, O2 mittels des Fingerabdruckes oder mittels mehrerer extrahierter Fingerabdrücke identifiziert werden.

Auf Grundlage der semantischen Informationen, des Perzeption-Fingerabdruckes und anhand aufgrund der momentanen Position des Fahrzeuges 1 ermittelten Positionsinformationen wird ein zeitverzögertes Modell im Fahrzeug 1 mit Methoden des maschinellen Lernens trainiert. Dabei wird das Modell derart trainiert, dass eine gemessene Innenraumschadstoffbelastung als Zielgröße prognostiziert wird. Bei dem Modell kann es sich beispielsweise um ein Regressionsmodell oder ein Modell durch verstärkendes Lernen handeln.

In dem Modell werden eine zeitliche Verzögerung und eine zeitliche Integration der Schadstoffbelastung der Außenluft, beispielsweise durch Verwendung von Zeitreiheninformationen berücksichtigt.

Ein solches Modell ermöglicht implizit eine Bestimmung der Zeitverzögerung zwischen einer vergleichsweise hohen Innenraumschadstoffbelastung, insbesondere einer Schadstoffbelastung, die einen vorgegebenen Schwellwert überschreitet, und einer durch das Modell ermittelten Ursache für eine verhältnismäßig hohe Schadstoffbelastung der Außenluft. Beispielsweise ist eine solche Ursache der hohen Schadstoffbelastung ein Lastkraftwagen 4 und/oder ein vorausfahrender Traktor mit einem Anhänger voll mit Wirtschaftsdünger, sogenannter Gülle.

Dieses derart trainierte Modell wird im Fahrzeug 1 verwendet, um mittels Eingabeinformationen, insbesondere mittels der semantischen Informationen, des Perzeption-Fingerabdruckes und der Positionsinformationen eine zu erwartende Innenraumschadstoffbelastung des Fahrzeuges 1 zu prognostizieren. Wird eine zukünftige verhältnismäßig hohe Innenraumschadstoffbelastung prognostiziert, so wird eine Innenraumbelüftung derart geregelt, dass die Außenluftzufuhr in den Innenraum des Fahrzeuges 1 entsprechend der prognostizierten Innenraumschadstoffbelastung verringert oder abgeschaltet wird.

In einer Ausführungsform kann das Modell während einer Entwicklung des Fahrzeuges 1 vortrainiert werden, wobei das Modell auch in weiteren Fahrzeugen einer Fahrzeugflotte nutzer- und/oder regionsspezifisch trainiert und/oder weitertrainiert werden kann.

Denkbar ist auch, dass allgemeine, nutzer- und/oder regionsspezifische Modelle durch verteiltes Lernen, sogenanntes federated learning, anhand Erfahrungen der weiteren Fahrzeuge der Fahrzeugflotte in einer zentralen Rechnereinheit 7, beispielsweise eines Fahrzeugherstellers, zusammengeführt und aggregiert werden.

Das Modell ermöglicht zusätzlich ein Erkennen von Ursachen einer vergleichsweisen hohen Schadstoffkonzentration, z. B. ein Lastkraftwagen 4 und/oder eine Industrieanlage 6, welche regionsspezifisch sein kann. Solche Informationen können beispielsweise genutzt werden, Quellen einer vergleichsweisen hohen Schadstoffkonzentration in der Umgebung des Fahrzeuges 1 länder- und/oder regionsspezifisch zu identifizieren.

Mittels der zentralen Rechnereinheit 7 können bzw. kann dann die jeweiligen Modelle und/oder das aggregierte Modell dem Fahrzeug 1 und den weiteren Fahrzeugen der Fahrzeugflotte zur Verfügung gestellt werden.

Das Verfahren sieht also vor, dass visuelle Informationen der visuellen Erfassungseinheit 3, einer Geoposition, d. h. einer momentanen Position des Fahrzeuges 1 und anhand des Schadstoffsensors 2 ein Modell gelernt wird, welches die Innenraumschadstoffbelastung, d. h. eine Innenraumschadstoffkonzentration, insbesondere basierend auf den visuellen Informationen, prognostiziert.

Beispielsweise können erkannte bewegte Objekte O1 und stationäre Objekte O2 mit einer vergleichsweise hohen Schadstoffbelastung der Außenluft und somit auch zeitverzögert mit einer vergleichsweise hohen Innenraumschadstoffbelastung korrelieren, wobei das vorgestellte Modell diese Korrelation erlernt.

## Patentansprüche

1. Verfahren zur Einstellung einer Außenluftzufuhr in einen Innenraum eines Fahrzeuges (1), wobei
- anhand erfasster Signale eines im Innenraum angeordneten Schadstoffsensors (2) während eines Fahrbetriebes des Fahrzeuges (1) kontinuierlich eine Innenraumschadstoffbelastung ermittelt wird,
- eine Schadstoffbelastung einer Außenluft auf einem dem Fahrzeug (1) vorausliegenden Fahrstreckenabschnitt prognostiziert wird,
- die Außenluftzufuhr in Abhängigkeit der prognostizierten Schadstoffbelastung der Außenluft automatisch geregelt wird,
- die Schadstoffbelastung der Außenluft des Fahrzeuges (1) anhand visueller Informationen bestimmt wird, die anhand erfasster Signale zumindest einer fahrzeugseitigen visuellen Erfassungseinheit (3) ermittelt werden,
- aus den erfassten visuellen Informationen semantische Informationen extrahiert werden,
- anhand der visuellen Informationen ein Fingerabdruck zur Identifizierung Schadstoffe ausstoßender Objekte (O1, O2) in zukünftig erfassten Signalen der zumindest einen visuellen Erfassungseinheit (3) extrahiert wird und
- fortlaufend eine momentane Position des Fahrzeuges (1) ermittelt wird, **dadurch gekennzeichnet, dass**
- auf Basis der extrahierten semantischen Informationen, des extrahierten Fingerabdruckes und anhand der ermittelten momentanen Position des Fahrzeuges (1) ermittelten Positionsinformationen ein zeitverzögertes Modell im Fahrzeug (1) derart trainiert wird, dass die Innenraumschadstoffbelastung als Zielgröße prognostiziert wird,
- anhand des Modells die Zeitverzögerung zwischen einer hohen Innenraumschadstoffbelastung und einer durch das Modell extrahierten Ursache bestimmt wird und
- dass anhand des trainierten Modells im Fahrzeug (1) mittels der semantischen Informationen, des Fingerabdruckes und der Positionsinformationen eine zu erwartende Innenraumschadstoffbelastung des Fahrzeuges (1) prognostiziert wird und dann, wenn eine zukünftige verhältnismäßig hohe Innenraumschadstoffbelastung prognostiziert wird, eine Innenraumbelüftung derart geregelt wird, dass die Außenluftzufuhr in den Innenraum entsprechend der prognostizierten Innenraumschadstoffbelastung verringert oder abgeschaltet wird.

2. Verfahren nach Anspruch 1,
**dadurch gekennzeichnet, dass** als semantische Informationen Schadstoffe ausstoßende bewegte Objekte (O1) und stationäre Objekte (O2) in den visuellen Informationen einer Umgebung des Fahrzeuges (1) erfasst werden.

3. Verfahren nach Anspruch 1 oder 2,
**dadurch gekennzeichnet, dass** das trainierte Modell einer zentralen Rechnereinheit (7) zugeführt wird.

4. Verfahren nach einem der vorhergehenden Ansprüche,
**dadurch gekennzeichnet, dass** das trainierte Modell an weitere Fahrzeuge einer Fahrzeugflotte übermittelt wird.

## Claims

1. Method for adjusting an outside air supply into an interior of a vehicle (1),
- an interior pollution load being continuously ascertained on the basis of signals recorded by a pollutant sensor (2) arranged in the interior during driving of the vehicle (1),
- a pollution load of outside air being forecast on a portion of the route ahead of the vehicle (1),
- the outside air supply being automatically regulated depending on the forecast pollution load of the outside air,
- the pollution load of the outside air of the vehicle (1) being determined on the basis of visual information ascertained from signals detected by at least one vehicle-side visual detection unit (3),
- semantic information being extracted from the detected visual information,
- a fingerprint for identifying pollutant-emitting objects (O1, O2) in future detected signals of the at least one visual detection unit (3) being extracted on the basis of the visual information, and
- a current position of the vehicle (1) being continuously ascertained, **characterized in that**
- based on the extracted semantic information, the extracted fingerprint and the position information ascertained from the current position of the vehicle (1), a time-delayed model is trained in the vehicle (1) in such a way that the interior pollution load is forecast as a target variable,
- the model being used to determine the time delay between a high interior pollution load and a cause extracted by the model and
- that on the basis of the trained model in the vehicle (1) by means of the semantic information, the fingerprint and the position information, an expected interior pollution load of the vehicle (1) is forecast and then, if a future relatively high interior pollution load is forecast, interior ventilation is regulated in such a way that the outside air supply to the interior is reduced or switched off in accordance with the forecast interior pollution load.

2. Method according to claim 1,
**characterized in that** moving objects (O1) and stationary objects (O2) emitting pollutants are detected as semantic information in the visual information of an environment of the vehicle (1).

3. Method according to either claim 1 or claim 2,
**characterized in that** the trained model is fed to a central computer unit (7).

4. Method according to any of the preceding claims,
**characterized in that** the trained model is transmitted to other vehicles in a vehicle fleet.

## Revendications

1. Procédé de réglage d'une arrivée d'air extérieur dans un habitacle d'un véhicule (1), dans lequel
- à l'aide de signaux détectés d'un capteur de substances toxiques (2) agencé dans l'habitacle, une charge en substances toxiques d'habitacle est déterminée en continu pendant la conduite du véhicule (1),
- une charge en substances toxiques d'un air extérieur est pronostiquée sur une section de trajet précédant le véhicule (1),
- l'arrivée d'air extérieur est régulée automatiquement en fonction de la charge en substances toxiques pronostiquée dans l'air extérieur,
- la charge en substances toxiques de l'air extérieur du véhicule (1) est définie à l'aide d'informations visuelles qui sont déterminées à l'aide de signaux détectés d'au moins une unité de détection visuelle (3) côté véhicule,
- des informations sémantiques sont extraites des informations visuelles détectées,
- à l'aide des informations visuelles, une empreinte digitale est extraite pour l'identification d'objets (01, O2) émettant des substances toxiques dans des signaux détectés à l'avenir de l'au moins une unité de détection visuelle (3) et
- une position momentanée du véhicule (1) est déterminée en continu, **caractérisé en ce que**
- sur la base des informations sémantiques extraites, de l'empreinte digitale extraite et des informations de position déterminées à l'aide de la position momentanée déterminée du véhicule (1), un modèle retardé est entraîné dans le véhicule (1) de telle sorte que la charge en substances toxiques d'habitacle est pronostiquée comme grandeur cible,
- à l'aide du modèle, le retard entre une charge en substances toxiques d'habitable élevée et une cause extraite par le modèle est défini,
- qu'à l'aide du modèle entraîné dans le véhicule (1), au moyen des informations sémantiques, de l'empreinte digitale et des informations de position, une charge en substances toxiques d'habitacle du véhicule (1) à laquelle il faut s'attendre est pronostiquée et ensuite, lorsqu'une charge en substances toxiques d'habitacle relativement élevée à l'avenir est pronostiquée, une ventilation d'habitacle est régulée de telle sorte que l'arrivée d'air extérieur dans l'habitacle est réduite ou coupée en fonction de la charge en substances toxiques d'habitacle pronostiquée.

2. Procédé selon la revendication 1,
**caractérisé en ce que** des objets en mouvement (01) émettant des substances toxiques et des objets stationnaires (O2) sont détectés comme informations sémantiques dans les informations visuelles d'un environnement du véhicule (1).

3. Procédé selon la revendication 1 ou 2,
**caractérisé en ce que** le modèle entraîné est fourni à une unité centrale de calcul (7).

4. Procédé selon l'une des revendications précédentes,
**caractérisé en ce que** le modèle entraîné est transmis à d'autres véhicules d'une flotte de véhicules.
